# EUROPEAN PATENT SPECIFICATION

(11) **EP 2 680 245 B1**
(45) Date of publication and mention of the grant of the patent: **19.12.2018**
(21) Application number: 12750032.0
(22) Date of filing: 22.02.2012
(51) Int. Cl.: G01D 4/00, H04Q 9/00, G01F 15/06, H01Q 1/24

(54) **WIRELESS DEVICE FOR AUTOMATED METER READING**
DRAHTLOSE VORRICHTUNG FÜR AUTOMATISIERTE ZÄHLERABLESUNG
DISPOSITIF SANS FIL POUR RELEVÉ AUTOMATIQUE DE COMPTEUR

(30) Priority: 25.02.2011 JP 2011039773
(43) Date of publication of application: 01.01.2014
(73) Proprietor: Panasonic Corporation, Osaka 571-8501 (JP)
(72) Inventor: SUGIYAMA, Masaki, Osaka 540-6207 (JP); HOSOKAWA, Shingo, Osaka 540-6207 (JP); WATANABE, Takashi, Osaka 540-6207 (JP); YOSHIKAWA, Yoshishige, Osaka 540-6207 (JP)
(74) Representative: Schwabe - Sandmair - Marx
(86) International application number: PCT/JP2012/001188
(87) International publication number: WO 2012/114733

(56) References cited:
- EP-A2- 1 079 207
- WO-A1-2009/143287
- WO-A2-99/13676
- JP-A- 6 348 987
- JP-A- 8 163 265
- JP-A- 10 042 054
- JP-A- 2005 195 558
- JP-A- 2007 298 394
- JP-U- H0 664 121
- US-A1- 2006 065 607
- US-A1- 2008 150 750
- "Certificat d'approbation", , 20 June 2002 (2002-06-20), XP055202751, Retrieved from the Internet: URL:http://www.lne.fr/fr/metrologie/metrol ogie_legale/certificats_2002/079.pdf [retrieved on 2015-07-16]
- "Certificat d'approbation", , 13 May 2005 (2005-05-13), pages 1-22, XP055202753, Retrieved from the Internet: URL:http://www.lne.fr/fr/metrologie/metrol ogie_legale/certificats_2005/0789.pdf [retrieved on 2015-07-16]
- "Gallus 2000 GAS METER Technical Characteristics", , 23 February 2010 (2010-02-23), XP055202758, Retrieved from the Internet: URL:http://web.archive.org/web/20100331085 024/http://www.norgas.com/PDFs/Meters/Gall us2000-2-10.pdf [retrieved on 2015-07-16]
- "Itron", , 2000, XP055202792, Retrieved from the Internet: URL:http://www.compteur-energie.com/media/ Itron_EmetteurG4Gallus_compteur-energie.co m.pdf [retrieved on 2015-07-16]
- "ELSTER AMCO PROFILES 2003 Vol. 3", , 2003, XP055202794, Retrieved from the Internet: URL:http://www.elster-instromet.com/assets /downloads/Profiles-Journale/Profiles_2003 _03.pdf [retrieved on 2015-07-16]
- "IN-Z61-IN-Z65 Low Frequency Pulse Transmitter", , 11 November 2013 (2013-11-11), XP055202798, Retrieved from the Internet: URL:http://docuthek.kromschroeder.com [retrieved on 2015-07-16]

## Description

### TECHNICAL FIELD

The present invention relates to automatic-metering wireless devices attached to meter devices such as gas meters.

### BACKGROUND ART

In recent years, for achieving labor savings of metering operation for meter devices such as gas meters and electricity meters, technologies have been commercialized including an automatic metering technology for automatically sending metered data, and a remote metering technology used at locations where the metering for the meter devices is difficult to carry out.

Moreover, for energy savings, field trials of the automatic metering technology and the remote metering technology over a wide area have often been conducted using a meter device with a wireless function of communicating metered data.

For the applications described above or the like, an automatic-metering wireless device is attached to a meter device without the wireless communication function. Conventional automatic-metering wireless devices send metered values obtained with a gas meter, for example, to an external wireless terminal device or a base station by utilizing their wireless communication function (see Patent Literature 1 and Patent Literature 2, for example).

For example, there is a method of utilizing magnetism to send the metered values obtained with a meter device to an external device. In this method, the inside of an indicator of the meter device is equipped with a magnetic generator, while the external device for reading values is equipped with a reed switch. The magnetic generator is configured to rotate in synchronization with the rotation of the meter.

The rotation of the magnetic generator varies the distance between the magnetic generator and the reed switch, which in turn varies the magnetism sensed by the reed switch, in response to a measured flow rate. The reed switch senses the intensity of the magnetism generated by the magnetic generator, and converts it into a pulse signal that can be electrically processed.

With such a configuration, assume a case where the metering values obtained with the meter device are transferred to an automatic-metering wireless device, by utilizing magnetism. In this case, it is required that both the reed switch and the automatic-metering wireless device equipped with the reed switch be disposed at a location where the magnetism generated by the magnetic generator can be appropriately sensed, and that the once-disposed location be difficult to change.

Unfortunately, no specific examination has yet been made regarding such as how to desirably attach the automatic-metering wireless device to the meter device.

On the other hand, proposals of tamper-resistant techniques as well have been made for such a meter device (see Patent Literature 3, for example).

The meter devices disclosed in Patent Literatures 4, 5, 6, 7 and 8 as well as common meter devices (see e.g. "Certificat d'approbation", 20 June 2002 (2002-06-20), XP055202751, Retrieved from the Internet: URL :http://www.lne.fr/fr/metrologie/ metrologie_legale/certificats_2002/079.pdf [retrieved on 2015-07-16]; "Certificat d'approbation", 13 May 2005 (2005-05-13), pages 1-22, XP055202753, Retrieved from the Internet: URL: http://www.lne.fr/fr/metrologie/metrologie_legale/certificats_2005/0789.pdf, [retrieved on 2015-07-16]; "Gallus 2000 GAS METER Technical Characteristics", 23 February 2010 (2010-02-23), XP055202758, Retrieved from the Internet: URL: http://web.archive.org/web/20100331085024/, http://www.norgas.com/PDFs/Meters/Gallus 2002-2-10.pdf, [retrieved on 2015-07-16]; "Itron", 1 January 2000 (2000-01-01), XP055202792, Retrieved from the Internet: URL: http://www.compteur-energie.com/ media/Itron_EmetteurG4Gallus_computer-energie.com.pdf, [retrieved on 2015-07-16]; "ELSTER AMCO PROFILES 2003 Vol. 3", 1 January 2003 (2003-01-01), XP055202794, Retrieved from the Internet: URL: http://www.elster-instromet.com/assets/ downloads/Profiles-Journale/Profiles_2003_03.pdf [retrieved on 2015-07-16]; "IN-Z61-IN-Z65 Low Frequency Pulse Transmitter", 11 November 2013 (2013-11-11), XP055202798, [retrieved on 2015-07-16]) all show several, but not all features of claim 1.

### Citation List

### Patent Literatures

Patent Literature 1: Japanese Patent Unexamined Publication No. H11-086174
Patent Literature 2: Japanese Patent Unexamined Publication No. H08-178725
Patent Literature 3: Japanese Patent Unexamined Publication No. H05-280662
Patent Literature 4: US 2008/150750 A1
Patent Literature 5: WO 99/13676 A2
Patent Literature 6: WO 2009/143287 A1
Patent Literature 7: US 2006/065607 A1
Patent Literature 8: EP 1 079 207 A1

### SUMMARY OF THE INVENTION

The invention is defined by the independent claim 1, whereas the description and the dependent claims describe advantageous embodiments.

The present invention is made in view of the aforementioned problems and intended to provide an automatic-metering wireless device in which a reed switch is disposed at a location which allows the switch to appropriately sense magnetism generated by a magnetic generator, and the once-disposed location is difficult to move.

The automatic-metering wireless device according to an exemplary embodiment of the invention is an automatic-metering wireless device capable of being attached to a meter device equipped with a magnetic generator. The wireless device includes a body and a readout reed switch for sensing the magnetism generated by the magnetic generator. Moreover, the wireless device includes: a projection disposed in a recess of the meter device to protrude from the body in a first direction, with the projection having the readout reed switch; and a first securing part which secures the body to the meter device in the first direction. In addition, the wireless device includes a second securing part that secures the body to the meter device in a second direction substantially perpendicular to the first direction.

### BRIEF DESCRIPTION OF DRAWINGS

FIG. 1 is a perspective view of a configuration in which an automatic-metering wireless device is being attached to a meter device, according to a first embodiment of the present invention.
FIG. 2 is a cross-sectional view of a configuration of an attachment portion of the automatic-metering wireless device attached to the meter device, according to the first embodiment of the invention.
FIG. 3 is a perspective view of a configuration in which an automatic-metering wireless device is being attached to a meter device, according to a second embodiment of the present invention.
FIG. 4 is a perspective view of a configuration in which the automatic-metering wireless device is attached to the meter device, according to the second embodiment of the invention.
FIG. 5 is a cross-sectional view of a configuration of an attachment portion of the automatic-metering wireless device attached to the meter device, according to the second embodiment of the invention.
FIG. 6A is a cross-sectional view of a configuration of an automatic-metering wireless device according to a third embodiment of the present invention.
FIG. 6B is a cross-sectional view of a configuration of a comparative automatic-metering wireless device.
FIG. 7 is a conceptual illustration of a relation between an ON region of a readout reed switch and an ON region of a tamper-resistant reed switch, according to the third embodiment of the invention.
FIG. 8 is a perspective view of an overall configuration of the automatic-metering wireless device according to the third embodiment of the invention.
FIG. 9 is an exploded perspective view of the configuration of the automatic-metering wireless device according to the third embodiment of the invention.
FIG. 10 is a perspective view illustrating a state in which the automatic-metering wireless device is attached to a meter device, according to the third embodiment of the invention.

### DESCRIPTION OF EMBODIMENTS

Hereinafter, descriptions will be made of embodiments according to the present invention, with reference to the accompanying drawings. Note, however, that these embodiments should not be construed as limitations on the present invention.

### (FIRST EXEMPLARY EMBODIMENT)

A first embodiment of the present invention will be described.

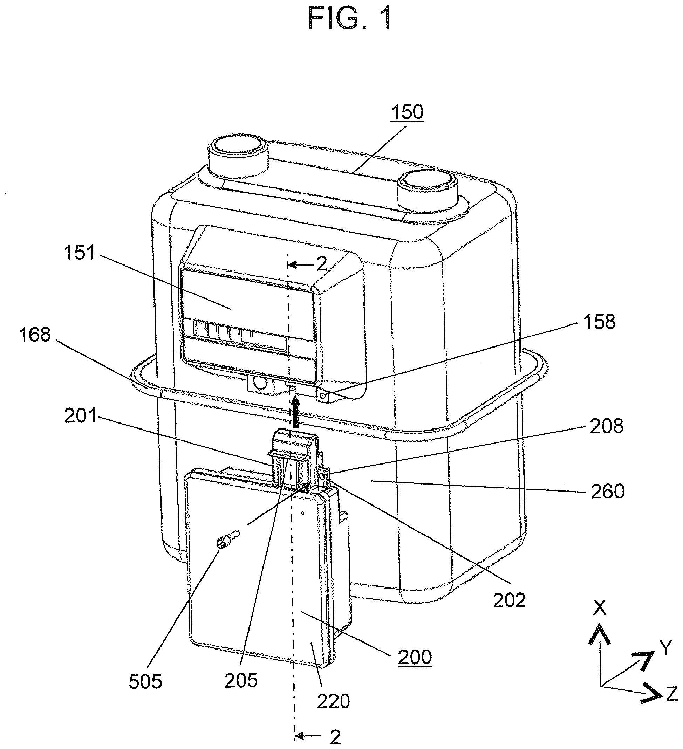

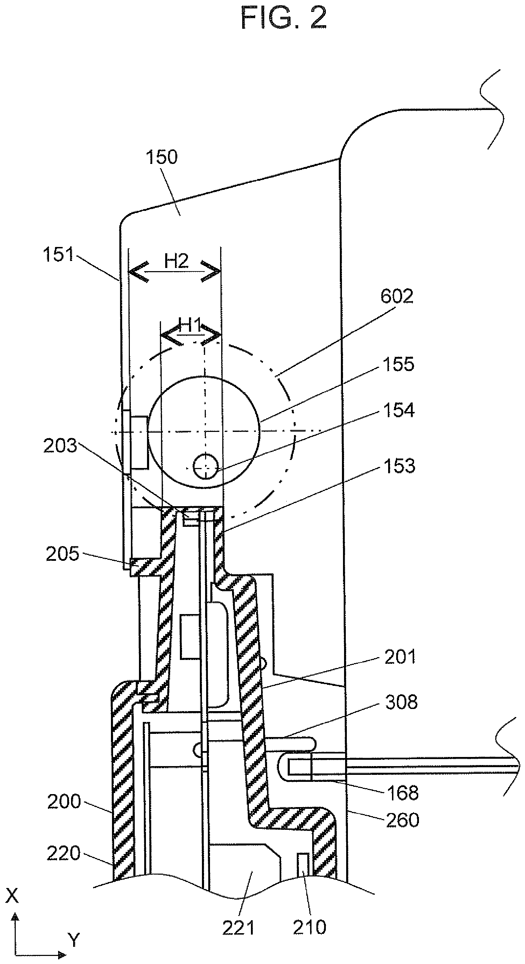

FIG. 1 is a perspective view of a configuration in which automatic-metering wireless device 200 is being attached to meter device 150, according to the first embodiment of the invention. Moreover, FIG. 2 is a cross-sectional view of a configuration of an attachment portion of automatic-metering wireless device 200 attached to meter device 150.

As shown in FIG. 1, meter device 150 includes measurement indicator 151 in the front, with the meter device being attached to a wall surface (not shown, a plane in parallel with the XZ plane in FIG. 1). In the embodiment, meter device 150 is a gas meter. Measurement indicator 151 indicates an amount of gas usage. Measurement indicator 151 is a meter in which digits to be indicated are changed by revolution (a detail description will be made later).

Automatic-metering wireless device (hereinafter, simply referred to as a wireless device) 200 includes body 220 having computing circuit 221 (see FIG. 2), and fitting projection 201 serving as a projection protruding from body 220 in the perpendicularly upward direction (a first direction, the X-axis direction in FIG. 1).

In the lower part of measurement indicator 151 of meter device 150, fitting recess 153 (see FIG. 2) serving as a recess is disposed which is depressed in the perpendicularly downward direction.

A user fits fitting projection 201 of wireless device 200 into fitting recess 153 of meter device 150, and then screws set screw 505 into hole 158 of meter device 150 via through-hole 208 disposed in securing member 202 in the upper portion of body 220. With this configuration, wireless device 200 is secured to meter device 150.

Meter device 150 and wireless device 200 are secured to each other in at least two directions substantially perpendicular to each other.

The first (a first securing part) is a securing by causing claw 308 (see FIG. 2) of the body of wireless device 200 to come in contact with outward extension part 168 protruding from the side surface of meter device 150. The claw is disposed on the body's surface opposed to meter device 150. With this configuration, wireless device 200 is prevented from moving with respect to meter device 150 in the same direction as the first direction in which fitting projection 201 protrudes, i.e. the up-and-down direction (the X-axis direction).

The second (a second securing part) is a securing of wireless device 200 to meter device 150, with set screw 505. With this configuration, wireless device 200 is prevented from moving with respect to meter device 150 in the second direction, i.e. the back-and-forth direction (the Y-axis direction in FIG. 1), orthogonal to the direction in which fitting projection 201 protrudes.

In this way, in accordance with the embodiment, it is possible to secure wireless device 200 to be prevented from moving with respect to meter device 150 in the at least two directions, that is, the first direction the same as the protruding direction of fitting projection 201 and the second direction substantially orthogonal to the first direction. With this configuration, it is possible to achieve the configuration in which wireless device 200 is difficult to move with respect to meter device 150, even such as when an external force is applied to wireless device 200. That is, wireless device 200 can be implemented in which the once-disposed location thereof is difficult to change.

As shown in FIG.2, in the end portion of the inside of fitting projection 201, readout reed switch 203 (simply referred to as a reed switch, in the first embodiment and the second embodiment) is disposed. Reed switch 203 is disposed at the location in the proximity of magnetic generator 154 attached in the back of measurement indicator 151.

Magnetic generator 154 is set on disk 155. Disk 155 is accommodated in the back of measurement indicator 151 of meter device 150. Disk 155 is configured to transform the movement of a fluid, such as a gas, which passes through inside meter device 150, into a rotary motion. The transformation is made in such a manner that the disk rotates 360 degrees for every passing of a certain amount (e.g. 10 liters) of the fluid.

As described earlier, measurement indicator 151 includes an indicator panel which revolves in an interlocked manner with the rotary motion of disk 155 so as to indicate the latest amount of gas usage.

The rotation of disk 155 varies the distance between reed switch 203 and magnetic generator 154. Reed switch 203 turns to an on state (referred to as "ON," hereinafter) as magnetic generator 154 comes closer to it, whereas turns to an off state (referred to as "OFF," hereinafter) as magnetic generator 154 goes away from it. Reed switch 203 utilizes the switchover between the ON state and the OFF state to sense the rotary motion of disk 155 as a pulse signal.

Note that, in configuring wireless device 200, body 220 is preferably configured to have a box shape such that the overall wireless device can be arranged in intimate contact with side surface 260 of meter device 150, for space saving. Moreover, a board disposed inside body 220 is also preferably arranged to be placed (in the perpendicular direction) in parallel with side surface 260 of meter device 150, for space saving. In addition, for space saving, reed switch 203 is preferably surface-mounted on the board.

Computing circuit 221 accommodated in wireless device 200 cumulatively counts the number of the pulses sensed with reed switch 203. Computing circuit 221 sends the counted value to an external device such as a metering center for collecting the amounts of gas usage. Specifically, the counted value is, for example, the revolution number of a counter, i.e. the amount of fluid usage (e.g. 10 liters x the counted revolution number).

As shown in FIG. 2, in the embodiment, transverse cross-sectional thickness H1 of the end portion of fitting projection 201 is configured to be smaller than transverse cross-sectional thickness H2 of fitting recess 153. Then, fitting projection 201 is disposed to be biased toward one side of fitting recess 153 (toward the right side in FIG. 2, that is, toward the side closer to side surface 260 of meter device 150). With keeping this configuration, locations and the like of reed switch 203 and claw 308 are designed such that the distance between reed switch 203 and magnetic generator 154 becomes minimal. With this design, reed switch 203 can be disposed in the perpendicularly downward direction (directly below) from the axis of disk 155, and disposed within effective region 602 (the region in which reed switch 203 can sense the magnetism) of the magnetism of magnetic generator 154.

Note that the location of reed switch 203 with respect to magnetic generator 154 in the horizontal direction (the Z-axis direction in FIG. 1) can be determined from the location of set screw 505.

According to the described configuration, magnetic generator 154 of meter device 150 and reed switch 203 of wireless device 200 can be placed closer and secured to each other, which allows the use of reed switch 203 that features a low-sensitivity and a smaller-size. □

Moreover, in accordance with this configuration, as shown in FIG. 2, because fitting projection 201 is disposed on the right of fitting recess 153, the clearance between wireless device 200 and meter device 150 can be made small. More specifically, the distance between ground board 210 inside wireless device 200 and side surface 160 of meter device 150 can be made small. This configuration allows side surface 260 to act as an antenna, resulting in an increase in the transmission distance of radio waves sent from computing circuit 221.

Furthermore, as shown in FIG. 2, because fitting projection 201 is disposed on the right of fitting recess 153, the dimension of the protrusion of the surface of wireless device 200 from the surface of measurement indicator 151 can be made small, thereby allowing wireless device 200 to be easier to attach to meter device 150.

Note that the downsizing of reed switch 203 allows a reduction in the transverse cross-sectional thickness of fitting projection 201, which thereby expands the region in which fitting projection 201 is movable, leading to greater degree of freedom in adjustment.

In addition, in the front surface side of fitting projection 201, rib 205 is disposed to fill the difference between thickness H1 of the end portion of fitting projection 201 and thickness H2 of fitting recess 153. This allows fitting projection 201 to be attached to the inside of fitting recess 153 without a clearance, which increases positional accuracy of reed switch 203 with respect to magnetic generator 154, thereby increasing accuracy of sensing the pulses.

As described above, in accordance with the embodiment, it is possible to dispose reed switch 203 in the perpendicularly downward direction (directly below) from the rotary axis of disk 155. That is, reed switch 203 can be disposed within effective region 602 (the region in which reed switch 203 can sense the magnetism) of the magnetism of magnetic generator 154. In this way, since reed switch 203 can be disposed in a short distance from magnetic generator 154, it is possible to achieve the practical configuration even if the sensitivity of reed switch 203 is low to some extent.

Note, however, that the range of effective region 602 of the magnetism varies depending on the magnetism generated by magnetic generator 154 and on the sensitivity of reed switch 203 (the greater the magnetism of magnetic generator 154 and the higher the sensitivity of reed switch 203, the wider the range of effective region 602 is). However, from a tamper-resistant point of view, it is preferable that effective region 602 do not protrude forward from the surface of measurement indicator 151. This is because, for example, if a permanent magnet is placed within effective region 602 for the purpose of mischief, reed switch 203 is unable to correctly sense the magnetism of magnetic generator 154. For this reason, the magnetism generated by magnetic generator 154 has to be minimal. Specifically, a magnet with approximately 100 to 400 mT is preferably used. Note, however, that other materials such as an electro-magnet may be used in the configuration, as long as they are capable of varying a magnetic field in response to the measurement results with meter device 150.

Moreover, in many cases, meter device 150 is installed in a box with a door, the depth of the box is designed and tailored for the thickness of meter device 150, which will often place limitations. Even in these cases, in order to make the door capable of being reliably closed, the surface of body 220 of wireless device 200 is preferably configured not to protrude forward from the surface of measurement indicator 151.

As described above, in the embodiment, meter device 150 and wireless device 200 are secured in the at least two directions substantially orthogonal to each other. With this configuration, fitting projection 201 is hardly moved out of position with respect to fitting recess 153, which thereby allows the location of reed switch 203 to be secured.

This allows magnetic generator 154 to be configured utilizing a minimum magnetism. In particular, through both the securing by contacting claw 308 with outward extension part 168 and the securing by using set screw 505, fitting projection 201 is hardly moved out of position in the up-and-down direction (the X-axis direction in FIG. 1) and in the depth direction (the Y-axis direction in FIG. 1) substantially orthogonal to the up-and-down direction. This configuration allows an increase in the positional accuracy of reed switch 203 with respect to magnetic generator 154, which thereby allows reed switch 203 to reliably read the intensity of the magnetism, resulting in an increased accuracy of sensing the pulses.

Note that, in the embodiment, the descriptions regarding the first securing part have been made using the securing by contacting claw 308 with outward extension part 168. Moreover, regarding the second securing part, the descriptions have been made using the securing by using set screw 505. It should be understood, however, that the present invention is not limited to these configurations and can be implemented using any of various commonly-known securing means.

### (SECOND EXEMPLARY EMBODIMENT)

Next, descriptions will be made regarding a second embodiment of the present invention.

In the embodiment, an example will be described in which wireless device 200 described in the first embodiment is attached to meter device 100 by using attachment adaptor 300. Meter device 100 and meter device 150 are different from each other in the shapes of their respective fitting recesses 103 and 153.

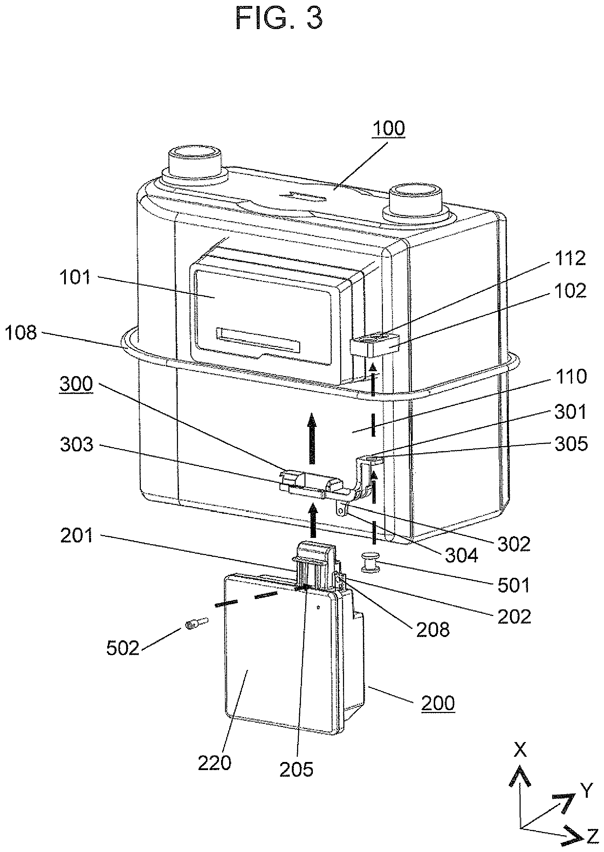

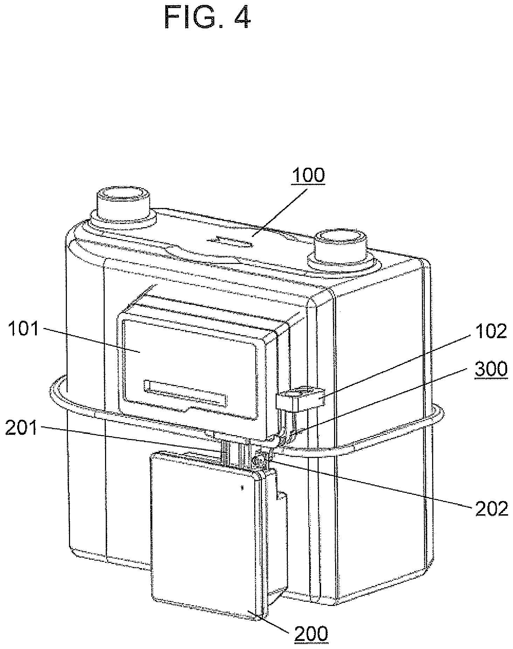

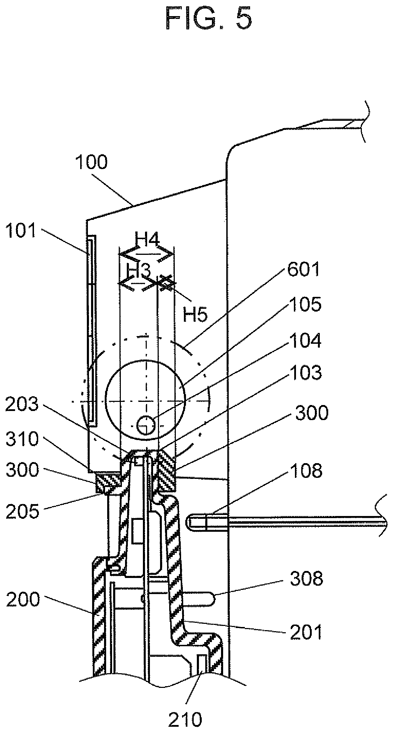

FIG. 3 is a perspective view of a configuration in which wireless device 200 is being attached to meter device 100, according to the second embodiment of the invention. Moreover, FIG. 4 is a perspective view of a configuration in which wireless device 200 is attached to meter device 100. In addition, FIG. 5 is a cross-sectional view of a configuration of an attachment portion of wireless device 200 attached to meter device 100.

As shown in FIGS. 3 and 4, meter device 100 that is attached to a wall surface (not shown, a plane in parallel with the XZ-plane in FIG. 3) is equipped with measurement indicator 101 in the front. In the embodiment as well, meter device 100 is a gas meter, and measurement indicator 101 indicates an amount of gas usage. As in the case of measurement indicator 151 in the first embodiment, measurement indicator 101 employs a meter in which digits to be indicated are changed by revolution.

In the embodiment, securing member 102 for securing attachment adaptor 300 is disposed on a side surface of measurement indicator 101. Securing member 102 has a horizontal face (in the YZ-plane direction in FIG. 3) so as to come in contact with securing member 301 of attachment adaptor 300.

Note that, since the configuration of wireless device 200 is the same as that according to the first embodiment, its description is omitted.

Attachment adaptor 300 includes securing member 301 in contact with securing member 102 of meter device 100 and securing member 302 in contact with securing member 202 of wireless device 200. Securing member 301 has a horizontal face (in the YZ-plane direction in FIG. 3) so as to come in contact with securing member 102 of meter device 100, whereas securing member 302 has a vertical face (in the XZ-plane direction in FIG. 3) so as to come in contact with securing member 202 of wireless device 200. Securing member 202 also has a vertical face (in the XZ-plane direction in FIG. 3) so as to come in contact with securing member 302.

Moreover, attachment adaptor 300 includes through-hole 303 formed in a ring shape for passing fitting projection 201 through it. Securing member 302 and securing member 301 include through-hole 304 and through-hole 305, respectively.

In the lower part of measurement indicator 101 of meter device 100, fitting recess 103 (see FIG. 5) is disposed which is a recess depressed in the perpendicularly downward direction.

A user passes fitting projection 201 of wireless device 200 through through-hole 303 of attachment adaptor 300, and then disposes it in the inside of fitting recess 103 of meter device 100. While keeping this state, through-hole 305 of securing member 301 and through-hole 112 of securing member 102 are secured to each other with rivet 501. In addition, through-hole 208 of securing member 202 and through-hole 304 of securing member 302 are secured to each other with set screw 502.

With this configuration, wireless device 200 is secured to meter device 100.

As in the case of the first embodiment, meter device 100 and wireless device 200 are secured to each other in the two directions substantially orthogonal to each other.

The first (a first securing part) is the securing, with rivet 501, between securing member 301 of attachment adaptor 300 and securing member 102 disposed on the side surface of meter device 100. With this configuration, wireless device 200 is prevented from moving with respect to meter device 100 in the same direction as the first direction, i.e. the up-and-down direction (the X-axis direction in FIG. 3), in which fitting projection 201 protrudes from body 220. They are secured by passing rivet 501 through through-holes 305 and 112 that are respectively disposed in the mating surfaces of securing member 301 and securing member 102. Each of the mating surfaces is located in the plane (the plane parallel to the YZ-plane) perpendicular to the wall surface (the plane parallel to the XZ-plane) on which meter device 100 is attached.

The second (a second securing part) is the securing, with set screw 502, between through-hole 208 of securing member 202 of wireless device 200 and through-hole 304 of securing member 302 of attachment adaptor 300. Securing member 202 has a mating surface (a plane in the XZ-plane direction in FIG. 3) located in parallel with the wall surface on which meter device 100 is attached, while securing member 302 also has a mating surface located in parallel with the wall surface. Then, by passing set screw 502 through through-holes 208 and 304 disposed in these two mating surfaces, wireless device 200 and attachment adaptor 300 are secured. With this configuration, wireless device 200 is secured in the second direction (the Y-axis direction in FIG. 3) substantially orthogonal to the direction (the first direction) in which fitting projection 201 protrudes.

In this way, by using attachment adaptor 300, wireless device 200 according to the embodiment can also be secured to be prevented from moving with respect to meter device 100 in the at least two directions, that is, the first direction the same as the protruding direction of fitting projection 201 and the second direction substantially orthogonal to the first one. With this configuration, it is possible to achieve the configuration in which wireless device 200 is difficult to move with respect to meter device 100 even such as when an external force is applied to wireless device 200. That is, wireless device 200 can be implemented that is difficult to move the location at which the device is once disposed.

As shown in FIG. 5, in the end portion of the inside of fitting projection 201, reed switch 203 is disposed, Reed switch 203 is disposed at the location in the proximity of magnetic generator 104 attached in the inside back of measurement indicator 101.

Magnetic generator 104 is disposed on disk 105. Disk 105 is accommodated in the back of measurement indicator 101 of meter device 100. Disk 105 is configured to transform the movement of a fluid such as a gas, which passes through inside meter device 100, into a rotary motion in such a manner that the disk rotates 360 degrees for every passing of a certain amount (e.g. 10 liters) of the fluid.

Measurement indicator 101 includes an indicator panel, as described earlier, which revolves in an interlocked manner with the rotary motion of disk 105 so as to indicate the latest amount of gas usage.

Note that, from a tamper-resistant point of view, the magnetism generated by magnetic generator 104 has to be minimal. Specifically, a magnet with approximately 100 to 400 mT is preferably used. Note also that other materials such as an electro-magnet may be used in the configuration, as long as they are capable of varying a magnetic field in response to the measurement results with meter device 100.

The rotation of disk 105 varies the distance between reed switch 203 and magnetic generator 104. Reed switch 203 turns to the ON state as magnetic generator 104 comes closer to it, whereas turns to the OFF state as magnetic generator 104 goes away from it. Reed switch 203 utilizes the switchover between the ON state and the OFF state to sense the rotary motion of disk 105 as a pulse signal.

As shown in FIG. 5, in the embodiment, transverse cross-sectional thickness H3 of the end portion of fitting projection 201 is configured to be smaller than transverse cross-sectional thickness H4 of fitting recess 103. Moreover, the configuration is designed such that transverse cross-sectional thickness H4 of fitting recess 153 is substantially equal to the sum of transverse cross-sectional thickness H3 of the end portion of fitting projection 201 and transverse cross-sectional thickness H5 of the end portion of attachment adaptor 300.

Through-hole 303 of attachment adaptor 300, through which fitting projection 201 passes, is disposed such that the end portion of fitting projection 201 is located in the left end of fitting recess 103. As shown in FIG. 5, it is possible to dispose reed switch 203 in the perpendicularly downward direction (directly below) from the rotary axis of disk 105 such that the reed switch is placed within effective region 601 (the region in which reed switch 203 can sense the magnetism) of the magnetism of magnetic generator 104. Since reed switch 203 can be disposed in a short distance from magnetic generator 104, it is possible to achieve the configuration even if the sensitivity of reed switch 203 is low to some extent.

Note that the range of effective region 601 of the magnetism varies depending on the magnetism generated by magnetic generator 104 and the sensitivity of reed switch 203 (the greater the magnetism of magnetic generator 104 and the higher the sensitivity of reed switch 203, the wider the range of effective region 601 is). However, from a tamper-resistant point of view, it is preferable that effective region 601 do not protrude forward from the surface of measurement indicator 101. This is because, for example, if a permanent magnet is placed within effective region 601 for the purpose of mischief, reed switch 203 is unable to correctly sense the magnetism of magnetic generator 104. For this reason, the magnetism generated by magnetic generator 104 has to be minimal. Specifically, the magnetism is preferably approximately 100 to 400 mT.

Note that the location of attachment adaptor 300 is adjusted, at the same time of adjusting the location of reed switch 203, to minimize the clearance between wireless device 200 and side surface 110 of meter device 100. Accordingly, the surface of wireless device 200 does not protrude forward from the surface of measurement indicator 101.

Moreover, on fitting projection 201, rib 205 is disposed. In attachment adaptor 300, accepting part 310 for rib 205 is disposed to configure such that fitting projection 201 can be set, without a tilt, in through-hole 303 of the ring portion of attachment adaptor 300. This allows an increase in positional accuracy of readout reed switch 203 with respect to magnetic generator 104, resulting in an improved accuracy of sensing the pulses.

As described above, in the embodiment, meter device 100 and wireless device 200 are secured to each other in the at least two directions substantially orthogonal to each other. With this configuration, because fitting projection 201 is hardly moved out of position with respect to fitting recess 103, the location of reed switch 203 can be secured. Note that, in the embodiment, outward extension part 108 and claw 308 are not in contact with each other.

Consequently, magnetic generator 104 can be configured to generate a minimum magnetism. In particular, the out-of-position movement in the up-and-down direction hardly occurs due to the securing between securing member 301 and securing member 102 in the first direction (the X-axis direction in FIG. 3). Moreover, fitting projection 201 is hardly moved laterally out of position due to the securing between securing member 202 and securing member 302 in the second direction (the Y-axis direction in FIG. 3) orthogonal to the first direction. This allows an increase in positional accuracy of reed switch 203, resulting in an improved accuracy of sensing the pulses.

As described above, in accordance with the embodiment, attachment adaptor 300 can be used to adjust the attachment position of wireless device 200 to meter device 100. Consequently, the shape of attachment adaptor 300 is appropriately designed such that wireless device 200 having a ready-made shape can be attached, with high positional accuracy, to various meter devices having fitting recess 103 with a different dimension.

Note that, in the embodiment, the descriptions regarding the first securing part have been made using the example in which securing member 102 and securing member 301 are secured to each other with rivet 501. Moreover, the descriptions regarding the second securing part have been made using the example in which securing member 202 and securing member 302 are secured to each other with set screw 502. It should be understood, however, that the present invention is not limited to these configurations and can be implemented using any of various commonly-known securing means.

### (THIRD EXEMPLARY EMBODIMENT)

Next, descriptions will be made regarding a third embodiment of the present invention.

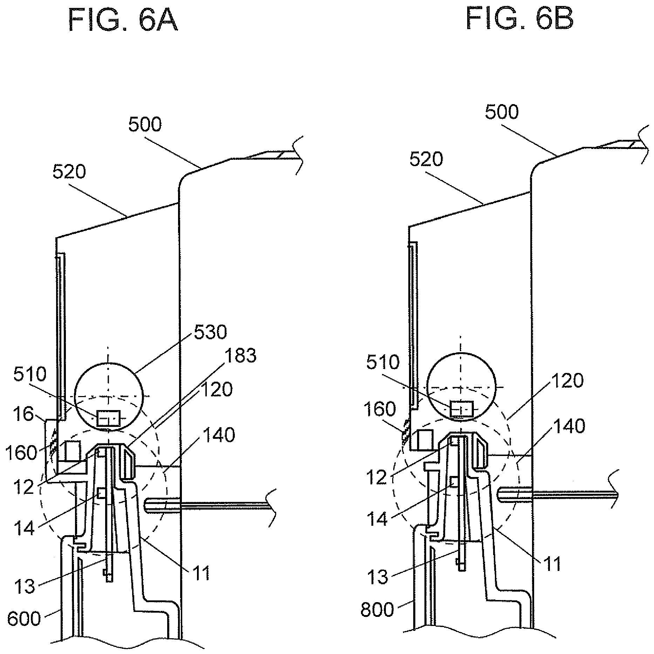

FIG. 6A is a cross-sectional view of a configuration of wireless device 600 according to a third embodiment of the present invention. FIG. 6B is a cross-sectional view of a configuration of comparative wireless device 800.

As shown in FIG. 6A, wireless device 600 according to the embodiment is attached to meter device 500 which includes magnetic generator 510 inside a case. The wireless device receives information from meter device 500 by utilizing magnetism generated by magnetic generator 510.

Wireless device 600 includes readout reed switch 12 and tamper-resistant reed switch 14. The readout reed switch is disposed at the location such that magnetic generator 510 enters ON region 120 when the wireless device is attached to meter device 500. The tamper-resistant reed switch is disposed at the location such that magnetic generator 510 does not enter ON region 140 when the device is attached to meter device 500.

Moreover, wireless device 600 includes protection part 16 that is a defensive wall serving as a physical barrier which prevents a magnetic generator other than magnetic generator 510 of meter device 500 from being placed in to-be-protected region 160 when the wireless device is attached to meter device 500. To-be-protected region 160 is a region that enters ON region 120 of readout reed switch 12 and does not enter ON region 140 of tamper-resistant reed switch 14, and that locates outside the case of meter device 500.

In the embodiment, readout reed switch 12 and tamper-resistant reed switch 14 are disposed on readout board 13 located in parallel with the side wall of meter device 500. In this case, the two reed switches are disposed to be separated from each other in the perpendicular direction. With this disposition, when wireless device 600 is attached to meter device 500, there possibly exists to-be-protected region 160 that enters the ON region of readout reed switch 12 and does not enter the ON region of tamper-resistant reed switch 14, and that locates outside the case of meter device 500. When such to-be-protected region 160 exists, it becomes possible to interfere with normal readout operation by placing such as a bar magnet in this region in such a manner that the tamper-resistant reed switch is prevented from turning to the ON state while the readout reed switch is kept in the ON state.

In the embodiment, protection part 16 is disposed in to-be-protected region 160. This allows a more effective curb on mischief utilizing a magnet against wireless device 600 that receives the information from meter device 500 through the use of magnetic sensor 510.

Note that, in the embodiment, the descriptions are made using the example in which wireless device 600 is attached to meter device 500 without using any attachment adaptor as in the case of the first embodiment; however, the present invention is not limited to the example. For example, the present invention also includes the configuration in which wireless device 600 is attached to meter device 500 using an attachment adaptor such as described in the second embodiment.

Moreover, in the embodiment, wireless device 600 is also secured to meter device 500 so as to be prevented from moving in the at least two directions, that is, the first direction the same as the protruding direction of a fitting projection (readout part 11) and the second direction orthogonal to the first direction. This configuration and its corresponding advantages are the same as those of the first embodiment and the second embodiment.

Moreover, in this specification, the descriptions are made using specified directions such as the up and down directions; however, these directions are used only for convenience in illustration. It goes without saying that the designations of the directions can be optionally replaced through an appropriate rotation.

Wireless device 600 according to the embodiment includes readout board 13 that extends in the perpendicular direction when the wireless device is attached to meter device 500. Readout reed switch 12 and tamper-resistant reed switch 14 are surface-mounted on readout board 13 and separated from each other in the up-and-down direction when wireless device 600 is attached to meter device 500.

Wireless device 600 according to the embodiment is configured to be capable of sending, by wireless, the information received from meter device 500.

Meter device 500 is a gas meter disposed to such as gas piping, for measuring such as an amount of gas usage.

Magnetic generator 510 is configured to vary a magnetic field in response to the measurement results with meter device 500. Magnetic generator 510 may employ a magnet which is disposed at the circumferential edge of a disk that rotates. Note that any other materials such as an electro-magnet may be used in the configuration, as long as they are capable of varying the magnetic field in response to the measurement results with meter device 500.

ON region 120 is the operation region of readout reed switch 12. That is, when magnetic generator 510 enters ON region 120, readout reed switch 12 turns to the ON state. On the other hand, when magnetic generator 510 is outside ON region 120, readout reed switch 12 is not in the ON state but turns to the OFF state unless another magnetic generator comes into ON region 120.

ON region 140 is the operation region of tamper-resistant reed switch 14. That is, when magnetic generator 510 does not enter ON region 140, tamper-resistant reed switch 14 does not turn to the ON state unless another magnetic generator comes into ON region 140. Since magnetic generator 510 exists outside ON region 140, tamper-resistant reed switch 14 is in the OFF state unless another magnetic generator comes into ON region 140 due to such as mischief.

In accordance with the described configuration, if a bar magnet is brought near to readout reed switch 12 for the purpose of mischief, tamper-resistant reed switch 14 turns simultaneously to the ON state, leading to execution of an abnormality process. On the other hand, the rotation of magnetic generator 510 inside meter device 500 does not cause tamper-resistant reed switch 14 to turn to the ON state, which has no influence on the normal readout operation.

Readout reed switch 12 and tamper-resistant reed switch 14 are each configured with a so-called commonly-known reed switch. Specifically, for example, the switch has a configuration in which two reeds made of a ferromagnet are sealed in a glass tube, facing each other with a predetermined contact-spacing.

Upon applying a magnetic field from the outside in the direction orthogonal to the axis direction of the reeds, the reeds become magnetized to generate a magnetic force serving as an attractive force between their free ends facing each other, thereby causing both the free ends to come in contact with each other, i.e. in the ON state. Moreover, upon eliminating the magnetic field, the two reeds detach from each other due to elasticity of the reeds, turning to the OFF state. That is, in the normal state with a weak magnetic field, at least one of the reeds is biased toward the direction in which it goes away from the other. The magnetization of the reeds by the magnetic field causes a magnetic force against the bias force, which acts on the reeds to come in contact with each other at their contact point.

Tamper-resistant reed switch 14 is preferably used that offers a smaller working value (a higher sensitivity) relative to readout reed switch 12. The location of tamper-resistant reed switch 14 is appropriately arranged to cover ON region 120 as widely as possible in the outside of the case of meter device 500.

In the case where wireless device 600 is disposed to hang from the case of meter device 500 in the perpendicularly downward direction, tamper-resistant reed switch 14 is preferably disposed lower in the perpendicularly direction than readout reed switch 12, that is, the former is preferably disposed at a larger distance from magnetic generator 510 than the latter.

When wireless device 600 is attached to meter device 500, magnetic generator 510 can enter ON region 120. This means that, responding to the variations in the magnetic field that is generated by magnetic generator 510 in response to the measurement results with magnetic generator 510, readout reed switch 12 repeats the ON state and the OFF state.

When wireless device 600 is attached to meter device 500, magnetic generator 510 does not enter ON region 140. This means that even with the variations in the magnetic field generated by magnetic generator 510 in response to the measurement results with magnetic generator 510, tamper-resistant reed switch 14 does not turn to the ON state, but remains in the OFF state.

The sizes of ON region 120 and ON region 140 are different depending on the magnetic force, serving as a drive source, of magnetic generator 510, as well as depending on readout reed switch 12 and tamper-resistant reed switch 14. Accordingly, the actual sizes of ON region 120 and ON region 140 and the locations where readout reed switch 12 and tamper-resistant reed switch 14 have to be located, are appropriately arranged based on the intensity of the magnetism of magnetic generator 510, the location of the generator, and the like.

Specifically, for example, the magnetic field generated by magnetic generator 510 varies in response to the measurement results with meter device 500. In the state where the action of a magnetic generator other than magnetic generator 510 is negligible, readout reed switch 12 is arranged at the location where the ON state and the OFF state occur alternately in response to the thus-varying magnetic field.

On the other hand, tamper-resistant reed switch 14 is preferably arranged at the location where, even with such variations in the magnetic field, the switch is kept in the OFF state and does not turns to the ON state, and where the switch locates as close as possible to magnetic generator 510 and readout reed switch 12.

Readout reed switch 12 is used to read the measurement results with meter device 500, by utilizing the variations in the magnetic field generated by magnetic generator 510. For example, in the case where magnetic generator 510 is configured with a rotating magnet, readout reed switch 12 repeats the ON state and the OFF state in response to the rotation of the magnet to produce electric pulses, which thereby transforming the measurement results with meter device 500 into an electric signal. The electric signal is appropriately processed with a not-shown controller (a control circuit composed of a CPU, a memory, and the like). Since the specific method for reading can employ any of commonly-known techniques, its detail description is omitted.

Tamper-resistant reed switch 14 is utilized for monitoring the device, for preventing readout reed switch 12 from suffering from possible mischief. For example, if tamper-resistant reed switch 14 turns to the ON state, wireless device 600 determines that this means that a magnetic generator other than magnetic generator 510 is placed in the proximity to readout reed switch 12. Then, wireless device 600 can take actions including sending an abnormality signal and raising an alarm sound. Since the specific method for sending a notice of the mischief can employ any of commonly-known techniques, its detail description is omitted.

In the state where the wireless device is attached to meter device 500, to-be-protected region 160 is a region that enters ON region 120 and does not enter ON region 140, and that locates outside the case of meter device 500. Specifically, to-be-protected region 160 is, for example, the shaded area indicated in FIG. 6A and FIG. 6B.

Note that protection part 16 may employ any of protection members as long as they can be disposed as a physical barrier to keep magnetic generators other than magnetic generator 510 of meter device 500 out of to-be-protected region 160. Protection part 16 is preferably disposed in place as an integral whole with wireless device 600 so as to inevitably cover to-be-protected region 160, when wireless device 600 is attached to meter device 500. Protection part 16 is preferably disposed with the structure and strength enough to be difficult-to-remove, for a more effective curb on mischief.

Hereinafter, with reference to FIG. 6A, a specific configuration of wireless device 600 according to the third embodiment of the invention will be described in detail.

Meter device 500 includes indicator 520. In the inside of a case of the lower end portion of indicator 520, magnetic generator 510 is disposed that is composed of one magnet arranged at the circumferential edge of disk 530. The magnetism of the magnet is preferably approximately 100 to 400 mT.

Disk 530 is disposed in parallel with the perpendicular plane and rotates about its center, as an axis, in accordance with the amount of gas flow measured with meter device 500 (for example, such as, one 360-degree rotation for every 10 liters of gas usage). In the case of the lower end portion of indicator 520, a recess (fitting recess 183) is formed which is depressed in the perpendicularly upward direction.

Wireless device 600 includes readout part 11 (fitting projection) protruding upward. When wireless device 600 is attached to meter device 500, the end portion of readout part 11 is fitted into a recess (fitting recess 183). In the inside of readout part 11, readout board 13 is disposed to form a perpendicular plane.

On the upper end portion of readout board 13, readout reed switch 12 is surface-mounted. On readout board 13, tamper-resistant reed switch 14 is surface-mounted to be separated from readout reed switch 12 in the perpendicularly downward direction.

In FIG. 6A, ON region 120 of readout reed switch 12 is indicated by a dashed-line which corresponds to the intensity of the magnetic field of magnetic generator 510. In addition, ON region 140 of tamper-resistant reed switch 14 is also indicated by a dashed-line which corresponds to the intensity of the magnetic field of magnetic generator 510.

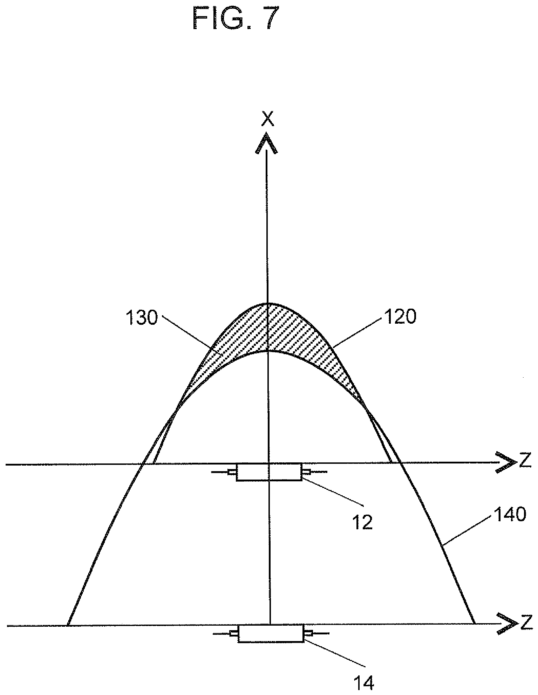

FIG. 7 is a conceptual illustration of a relation between ON region 120 of readout reed switch 12 and ON region 140 of tamper-resistant reed switch 14, according to the embodiment. FIG. 7 shows the positional relation between ON region 120 and ON region 140, as viewed from the front (the left side in FIG. 6A) of meter device 500.

As shown in FIG. 7, in the embodiment, readout reed switch 12 and tamper-resistant reed switch 14 are surface-mounted on readout board 13 such that their principal axes are horizontal and in parallel (in the Z-axis direction in FIG. 7) with the wall surface on which meter device 500 is attached.

The working value (e.g. approximately 10 to 20 A) of tamper-resistant reed switch 14 is smaller than the working value (e.g. approximately 5 to 15 A) of readout reed switch 12. Accordingly, ON region 140 (e.g. approximately 15 to 25 mm) is larger than ON region 120 (e.g. approximately 5 to 15 mm).

On the other hand, because tamper-resistant reed switch 14 is disposed below readout reed switch 12, the centers of ON region 120 and ON region 140 are separated from each other in the perpendicularly downward direction (the X-axis direction in FIG. 7). For this reason, there exists region 130 that enters ON region 120 and does not enter ON region 140.

Hereinafter, the operation of wireless device 600 according to the embodiment will be described, with reference to FIGS. 6A and 7.

Magnetic generator 510 rotates following the rotation of disk 530. When magnetic generator 510 moves to the lower end portion of disk 530, magnetic generator 510 is positioned in the inside (region 130) of ON region 120, which causes readout reed switch 12 to turn to the ON state. On the other hand, when magnetic generator 510 moves to the upper end portion of disk 530, magnetic generator 510 is positioned outside ON region 120, which causes readout reed switch 12 to turn to the OFF state.

In this way, readout reed switch 12 repeats the ON state and the OFF state following the rotation of magnetic generator 510 in response to the measurement results with meter device 500, thereby producing the electric pulses. Wireless device 600 operates in such a manner that wireless device 600 appropriately process the electric pulses with its controller (a computing circuit including a CPU, a memory, etc.). The controller may be one of a centralized controller equipped with a single CPU and a decentralized controller equipped with a plurality of CPUs.

Even with the rotation of disk 530, magnetic generator 510 always remains outside ON region 140. Therefore, even with the rotation of magnetic generator 510 in response to the measurement results with meter device 500, tamper-resistant reed switch 14 remains in the OFF state without change.

Outside the case of meter device 500, there exists a region included in ON region 120. If a magnetic generator such as a bar magnet is placed in this region for the purpose of mischief or the like, readout reed switch 12 does not work properly, being unable to properly read the measurement results with meter device 500.

In order to prevent this, the location of tamper-resistant reed switch 14 is arranged such that ON region 140 covers, as widely as possible, ON region 120 located outside the case of meter device 500. If such a magnetic generator is placed in ON region 120 located outside the case of meter device 500 for the purpose of mischief or the like, tamper-resistant reed switch 14 as well as readout reed switch 12 turns to the ON state. Receiving this situation, wireless device 600 raises an alarm sound and sends a notice of the occurrence of abnormality.

However, ON region 120 and ON region 140 are determined from, such as, the working values of readout reed switch 12 and tamper-resistant reed switch 14, and the intensity of the magnetism of magnetic generator 510. For this reason, even though being outside the case of meter device 500 and inside ON region 120, there exists a region (a part of region 130, which lies outside the case) which ON region 140 is unable to cover. This region is to-be-protected region 160 in this embodiment. In wireless device 600, in order to keep such a magnetic generator out of to-be-protected region 160, protection part 16 is disposed as a physical barrier.

Protection part 16 is disposed in the front (opposite to the wall surface side of meter device 500) of readout part 11 (see FIG. 6A). Protection part 16 is formed in a plate shape to protrude from a portion somewhat lower than the fitting portion with the recess (fitting recess 183) of the lower end portion of indicator 520, toward the direction away from meter device 500, and is then angled perpendicularly upward to cover the lower end portion of the front of indicator 520.

In FIG. 6B, comparative wireless device 800 is exemplified. Wireless device 800 has the same configuration as that of wireless device 600 according to the embodiment except that protection part 16 is not disposed. The constituent elements commonly used in both devices are given the same designations and numerals and symbols; therefore, their explanations are omitted.

In comparative wireless device 800 (FIG. 6B), to-be-protected region 160 is not protected. If a magnetic generator is placed in to-be-protected region 160, readout reed switch 12 remains in the ON state without change, which interferes with the proper reading. On the other hand, tamper-resistant reed switch 14 remains in the OFF state without change, which interferes with the sending of a notice of the occurrence of abnormality. Consequently, it is not possible to sufficiently curb such mischief.

In contrast, in wireless device 600 according to the embodiment (FIG. 6A), to-be-protected region 160 is protected by protection part 16, Therefore, a magnetic generator is unable to be placed in to-be-protected region 160, resulting in no occurrence of such a problem described above. As a result, in wireless device 600 that receives information from meter device 500 through the use of magnetic sensor 510, such mischief utilizing a magnet can be curbed more effectively.

Moreover, wireless device 600 according to the embodiment includes readout board 13 that extends in the perpendicular direction when wireless device 600 is attached to meter device 500. Furthermore, readout reed switch 12 and tamper-resistant reed switch 14 are surface-mounted on readout board 13 and separated from each other in the up-and-down direction when wireless device 600 is attached to meter device 500. Accordingly, it is possible to achieve space saving by bringing wireless device 600 into intimate contact with the side wall of meter device 500.

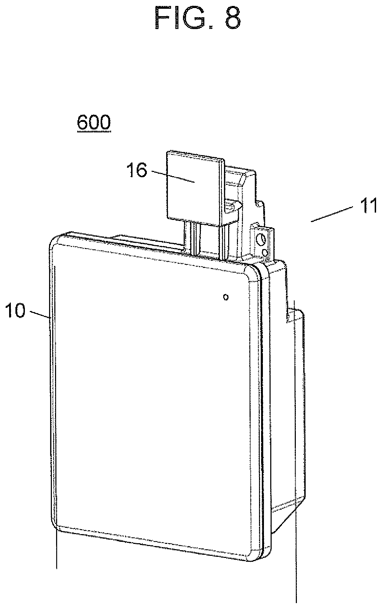

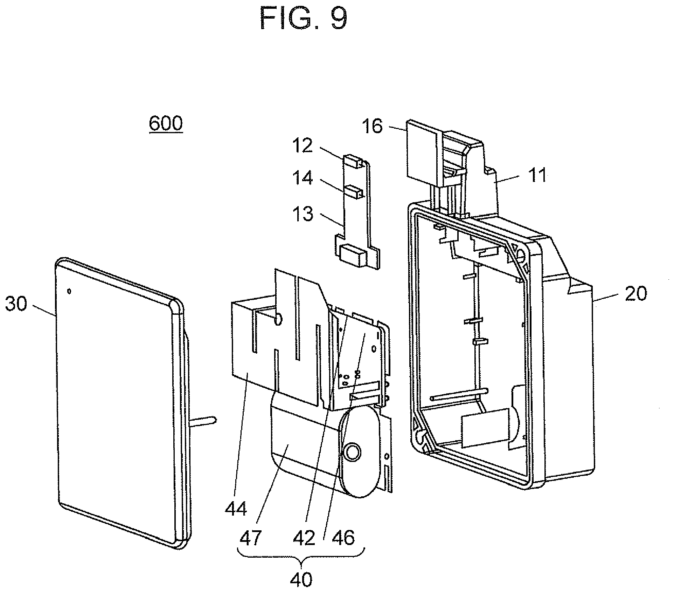

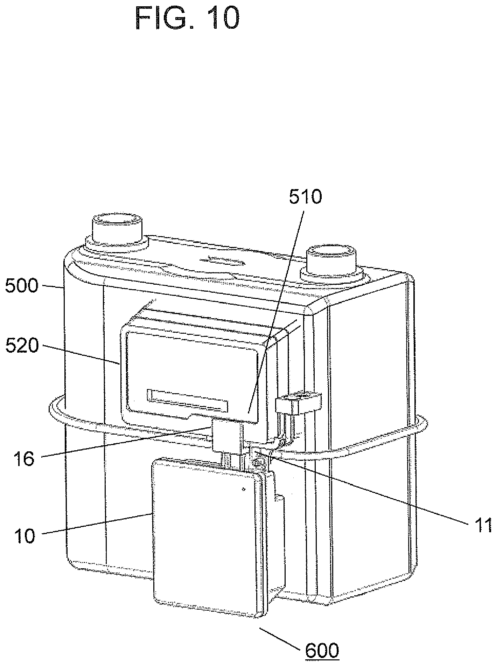

FIG. 8 is a perspective view of an overall configuration of wireless device 600 according to the third embodiment of the invention. FIG. 9 is an exploded perspective view of the configuration of wireless device 600. FIG. 10 is a perspective view illustrating the state in which wireless device 600 is attached to meter device 500.

As exemplified in FIG. 8, wireless device 600 includes body 10 having a flat box shape with two principal planes in parallel with the wall surface of meter device 500, readout part 11 protruding perpendicularly upward from the upper end portion of body 10, and protection part 16 extending from readout part 11.

As exemplified in FIG. 9, body 10 of wireless device 600 includes case 20 having a box shape with an opening, and lid 30 for sealing the opening. In the inside of a chamber configured with case 20 and lid 30, there are disposed readout board 13 and assembly 40 coupled with readout board 13.

In case 20, readout part 11 is formed that is a projection protruding upward from the upper end portion of the case. Into the inside of readout part 11, readout board 13 is inserted that includes readout reed switch 12 and tamper-resistant reed switch 14.

Assembly 40 includes board 42, antenna plate 44, ground board 46, and battery 47. On board 42, the controller (the control circuit) is formed including the CPU, the memory, and the like. The controller controls the steps of, such as, reading of the measurement results with meter device 500 by using readout reed switch 12, sending of the measurement results by using antenna plate 44, sensing of mischief by using tamper-resistant reed switch 14, raising an alarm, and so on. Battery 47 supplies electric power to board 42.

As described using FIG. 6A, wireless device 600 is attached to meter device 500 through the fitting of readout part 11 into the recess (fitting recess 183) that is formed in the right lower surface of indicator 520. As exemplified in FIG. 10, when wireless device 600 is attached to meter device 500, protection part 16 covers the lower surface and a part of the front of indicator 520. Inside indicator 520, magnetic generator 510 is disposed.

The relation of magnetic generator 510 to both readout reed switch 12 and tamper-resistant reed switch 14 which are disposed inside readout part 11, has been already described in detail in FIG. 7; therefore, the duplicate description is omitted.

The controller formed on board 42 sends the measurement results with meter device 500 which are read by using readout reed switch 12, to a base station or the like of a gas company, via antenna plate 44.

Note that, meter devices 100, 150, and 500 have been described each as a gas meter in the embodiments; however, the present invention is not limited to it. For example, the invention is applicable to the devices as long as they are ones for metering data, such as an electricity meter.

From the aforementioned descriptions, those skilled in the art will naturally recognize that numerous variations and modifications of the present invention as well as other embodiments thereof are obviously possible. Consequently, it should be construed that the aforementioned descriptions are nothing more than examples and are presented herein only for the purpose of illustrating the best mode of carrying out the present invention to those skilled in the art. The details of the structures and/or functions of the embodiments can be substantially changed without departing from the scope of the present invention as defined in the claims.

### INDUSTRIAL APPLICABILITY

As described above, in accordance with the present invention, an automatic-metering wireless device can be provided in which a reed switch is disposed at a location where it can appropriately sense the magnetism generated by a magnetic generator and the once-disposed location is difficult to move. Consequently, the wireless device is useful as an automatic-metering wireless device or the like that is attached to a meter device such as a gas meter.

### REFERENCE MARKS IN THE DRAWINGS

10,220 body
11 readout part (fitting projection)
12 readout reed switch
13 readout board
14 tamper-resistant reed switch
16 protection part
20 case
30 lid
40 assembly
42 board
44 antenna plate
46, 210 ground board
47 battery
100, 150,500 meter device
101, 151 measurement indicator
102, 202, 301, 302 securing member
103, 153, 183 fitting recess
104, 154, 510 magnetic generator
105, 155, 530 disk
108, 168 outward extension part
110, 260 side surface
112, 208, 304, 305 through-hole
120 ON region (of the readout reed switch)
130 region
140 ON region (of the tamper-resistant reed switch)
158 hole
160 to-be-protected region
200, 600, 800 (automatic-metering) wireless device
201 fitting projection
203 reed switch
205 rib
221 computing circuit
300 attachment adaptor
308 claw
310 accepting part
501 rivet
502, 505 set screw
520 indicator
601, 602 effective region

## Claims

1. A system comprising an automatic-metering wireless device (200, 600) and a meter device (100, 150, 600) having a case, the automatic-metering wireless device (200, 600) attached to the meter device (151) having a first magnetic generator (154), the wireless device (200, 600) comprising:
a body (220);
a readout reed switch (203) for sensing magnetism generated by the first magnetic generator (154), the readout reed switch (203) having an ON region (120) which is an operation region of the readout reed switch (203);
said case being formed such that the ON region of the readout reed switch (203) is partially outside said case;
a projection protruding from the body (220) in a first direction, and disposed in a recess (153) of the meter device (100, 150, 600) and including the readout reed switch (203);
a first securing part (308) for securing the body (220) in the first direction with respect to the meter device (100, 150, 500); and
a second securing part (208) for securing the body (220) in a second direction substantially orthogonal to the first direction, with respect to the meter device (100, 150, 500),
wherein the readout reed switch (203) is disposed within a region in which the reed switch (203) can sense a first magnetism, the first magnetism being generated by the first magnetic generator (154);
a tamper-resistant reed switch (14) for sensing a second magnetism generated by a second magnetic generator, the tamper-resistant reed switch (14) being disposed at a location such that the first magnetic generator (154) does not enter an ON region (140) of the tamper-resistant reed switch (14), a protection part (16) that is a defensive wall,
wherein said defensive wall (16) is disposed as a physical barrier in order to keep said second magnetic generator out of a to-be-protected region (160),
the to-be-protected region (160) being a region within said ON region of the readout reed switch (203), and
the to-be-protected region (160) being a region outside the ON region of the tamper-resistant reed switch (14), and
the to-be-protected region (160) being a region outside said case.

2. The system according to claim 1, wherein a distance between the readout reed switch (203) and the magnetic generator (154) is configured to become minimal in the first direction, and the readout reed switch (203) is disposed in an end portion of the inside of the projection (201).

3. The system according to claim 1 or 2, wherein the first securing part (308) includes a claw disposed in the body (220), for securing the body (220) in the first direction with respect to an outward extension part (168) of the meter device (100, 150, 500).

4. The system according to any one of claims 1 to 3, wherein the second securing part (208) includes a set screw (505) for securing the body (220) in the second direction with respect to the meter device (100, 150, 600).

5. The system according to claim 1, further comprising an attachment adaptor (300) disposed between the recess (153) and the projection (201) of the meter device (100, 150, 600).

6. The system according to claim 4, wherein the first securing part (308) includes a rivet (501) for securing the attachment adaptor (300) to the meter device (100, 150, 500).

7. The system according to claim 5 or 6, wherein the second securing part (208) includes a set screw (505) for securing the body (220) in the second direction with respect to the attachment adaptor (300).

8. The system according to claim 1, wherein the readout reed switch (12) and the tamper-resistant reed switch (14) are disposed to be separated from each other in an up-and-down direction.

9. The system according to claim 1 or 8, further comprising a readout board (13) on which the readout reed switch (12) and the tamper-resistant reed switch (14) are mounted, w
herein when the automatic-metering wireless device (200, 600) is attached to the meter device (100, 150, 500),
the readout reed switch (12) is disposed at an upper end portion of the readout board (13), and
the tamper-resistant reed switch (14) is disposed to be separated from the readout reed switch (12) in a perpendicularly downward direction.

10. The system according to claim 8 or 9, wherein the tamper-resistant reed switch (14) has higher sensitivity than the readout reed switch (12).

## Patentansprüche

1. System, das eine automatische drahtlose Messvorrichtung (200, 600) und eine Messvorrichtung (100, 150, 600) mit einem Gehäuse umfasst, wobei die automatische drahtlose Messvorrichtung (200, 600) an einer Messvorrichtung (151) mit einem ersten Magnetgenerator (154) angebracht ist, wobei die drahtlose Vorrichtung (200, 600) umfasst:
einen Korpus (220);
ein Auslesezungenschalter (203) zum Erfassen von Magnetismus, der durch den ersten Magnetgenerator (154) erzeugt wird, wobei der Auslesezungenschalter (203) einen AN-Bereich (120) hat, der ein Betriebsbereich des Auslesezungenschalters (203) ist;
wobei das Gehäuse so ausgebildet ist, dass sich der AN-Bereich des Auslesezungenschalters (203) teilweise außerhalb des Gehäuses befindet;
einen Vorsprung, der von dem Korpus (220) in einer ersten Richtung vorsteht und in einer Aussparung (153) der Messvorrichtung (100, 150, 600) angeordnet ist und den Auslesezungenschalter (203) aufweist;
ein erstes Befestigungsteil (308) zum Befestigen des Korpus (220) in der ersten Richtung mit Bezug auf die Messvorrichtung(100, 150, 600) und
ein zweites Befestigungsteil (208) zum Befestigen des Korpus (220) in einer zweiten Richtung im Wesentlichen orthogonal zu der ersten Richtung mit Bezug auf die Messvorrichtung(100, 150, 600),
wobei der Auslesezungenschalter (203) in einem Bereich angeordnet ist, in dem der Auslesezungenschalter (203) einen ersten Magnetismus erfassen kann, wobei der erste Magnetismus durch den ersten Magnetgenerator (154) erzeugt wird;
einen manipulationssicheren Zungenschalter (14) zum Erfassen eines zweiten Magnetismus, der durch einen zweiten Magnetgenerator erzeugt wird, wobei der manipulationssichere Zungenschalter (14) an einer Stelle so angeordnet ist, dass der erste Magnetgenerator (154) nicht in einen AN-Bereich (140) des manipulationssicheren Zungenschalters (14) gelangt,
ein Schutzteil (16), das eine Schutzwand ist,
wobei die Schutzwand (16) als eine physische Barriere angeordnet ist, um den zweiten Magnetgenerator von dem zu schützenden Bereich (160) fernzuhalten,
der zu schützende Bereich (160) ein Bereich in dem AN-Bereich des Auslesezungenschalters (203) ist und
der zu schützende Bereich (160) ein Bereich außerhalb des AN-Bereiches des manipulationssicheren Zungenschalters (14) ist und
der zu schützende Bereich (160) ein Bereich außerhalb des Gehäuses ist.

2. System nach Anspruch 1, wobei ein Abstand zwischen dem Auslesezungenschalter (203) und dem Magnetgenerator (154) so konfiguriert ist, dass er in der ersten Richtung minimal wird, und der Auslesezungenschalter (203) in einem Endteil im Inneren des Vorsprungs (201) angeordnet ist.

3. System nach Anspruch 1 oder 2, wobei das erste Befestigungsteil (308) eine in dem Korpus (220) angeordnete Klaue aufweist, um den Korpus (220) in der ersten Richtung mit Bezug auf ein nach außen gerichtetes Erweiterungsteil (168) der Messvorrichtung (100, 150, 600) zu befestigen.

4. System nach einem der Ansprüche 1 bis 3, wobei das zweite Befestigungsteil (208) eine Stellschraube (505) zum Befestigen des Korpus (220) in der zweiten Richtung mit Bezug auf die Messvorrichtung (100, 150, 600) aufweist.

5. System nach Anspruch 1, das des Weiteren einen Anbringungsadapter (300) umfasst, der zwischen der Aussparung (153) und dem Vorsprung (201) der Messvorrichtung (100, 150, 600) angeordnet ist.

6. System nach Anspruch 4, wobei das erste Befestigungsteil (308) einen Niet (501) zum Befestigen des Anbringungsadapters (300) an der Messvorrichtung (100, 150, 600) aufweist.

7. System nach Anspruch 5 oder 6, wobei das zweite Befestigungsteil (208) eine Stellschraube (505) zum Befestigen des Korpus (220) in der zweiten Richtung mit Bezug auf den Anbringungsadapter (300) aufweist.

8. System nach Anspruch 1, wobei der Auslesezungenschalter (12) und der manipulationssichere Zungenschalter (14) so angeordnet sind, dass sie voneinander in einer Richtung nach oben und unten getrennt sind.

9. System nach Anspruch 1 oder 8, das des Weiteren eine Auslesplatine (13) umfasst, auf der der Auslesezungenschalter (12) und der manipulationssichere Zungenschalter (14) montiert sind,
wobei, wenn die automatische drahtlose Messvorrichtung (200, 600) an der Messvorrichtung (100, 150, 600) angebracht ist,
der Auslesezungenschalter (12) an einem obere Endteil der Auslesplatine (13) angeordnet ist und
der manipulationssichere Zungenschalter (14) so angeordnet ist, dass er von dem Auslesezungenschalter (12) in einer rechtwinklig nach unten weisenden Richtung getrennt ist.

10. System nach Anspruch 8 oder 9, wobei der manipulationssichere Zungenschalter (14) eine höhere Empfindlichkeit hat als der Auslesezungenschalter (12).

## Revendications

1. Système comprenant un dispositif sans fil de mesure automatique (200, 600) et un dispositif de compteur (100, 150, 600) ayant un boîtier, le dispositif de mesure automatique (200, 600) attaché au dispositif de compteur (151) ayant un premier générateur magnétique (154), le dispositif sans fil (200, 600) comprenant :
un corps (220) ;
un commutateur de lecture à lames (203) destiné à détecter un magnétisme généré par le premier générateur magnétique (154), le commutateur de lecture à lames (203) ayant une région de MARCHE (120) qui est une région de fonctionnement du commutateur de lecture à lames (203) ;
ledit boîtier étant formé de sorte que la région de MARCHE du commutateur de lecture à lames (203) soit partiellement à l'extérieur dudit boîtier ;
une saillie en saillie depuis le corps (220) dans un premier sens et disposée dans un évidement (153) du dispositif de compteur (100, 150, 600) et comprenant le commutateur de lecture à lames (203) ;
une première pièce de fixation (308) destinée à fixer le corps (220) dans le premier sens vis-à-vis du dispositif de compteur (100, 150, 500) ; et
une deuxième pièce de fixation (208) destinée à fixer le corps (220) dans un deuxième sens sensiblement orthogonal au premier sens, vis-à-vis du dispositif de compteur (100, 150, 500),
le commutateur de lecture à lames (203) étant disposé dans une région dans laquelle le commutateur à lames (203) peut détecter un premier magnétisme, le premier magnétisme étant généré par le première générateur magnétique (154) ;
un commutateur à lames inviolable (14) destiné à détecter un deuxième magnétisme généré par un deuxième générateur magnétique, le commutateur à lames inviolable (14) étant disposé à un emplacement de sorte que le premier générateur magnétique (154) d'entre pas dans une région de MARCHE (140) du commutateur à lames inviolable (14),
une pièce de protection (16) qui est un rempart,
ledit
rempart (16) étant disposé en tant que barrière physique afin de maintenir ledit deuxième générateur magnétique hors d'une région à protéger (160),
la région à protéger (160) étant une région à l'intérieur de ladite région de MARCHE du commutateur de lecture à lames (203), et
la région à protéger (160) étant une région à l'extérieur de la région de MARCHE du commutateur à lames inviolable (14), et
la région à protéger (160) étant une région à l'extérieur dudit boîtier.

2. Système selon la revendication 1, dans lequel une distance entre le commutateur de lecture à lames (203) et le générateur magnétique (154) est conçue pour devenir minimale dans le premier sens, et le commutateur de lecture à lames (203) est disposé dans une partie terminale de l'intérieur de la saillie (201).

3. Système selon la revendication 1 ou 2, dans lequel la première pièce de fixation (308) comprend une griffe disposée dans le corps (220), destinée à fixer le corps (220) dans le premier sens vis-à-vis d'une pièce d'extension vers l'extérieur (168) du dispositif de compteur (100, 150, 500).

4. Système selon la revendication 1 ou 3, dans lequel la deuxième pièce de fixation (208) comprend une vis de calage (505) destinée à fixer le corps (220) dans le deuxième sens vis-à-vis du dispositif de compteur (100, 150, 600).

5. Système selon la revendication 1, comprenant en outre un adaptateur d'attache (300) disposé entre l'évidement (153) et la saillie (201) du dispositif de compteur (100, 150, 600).

6. Système selon la revendication 4, dans lequel la première pièce de fixation (308) comprend un rivet (501) destiné à fixer l'adaptateur d'attache (300) au dispositif de compteur (100, 150, 500).

7. Système selon la revendication 5 ou 6, dans lequel la deuxième pièce de fixation (208) comprend une vis de calage (505) destinée à fixer le corps (220) dans le deuxième sens vis-à-vis de l'adaptateur d'attache (300).

8. Système selon la revendication 1, dans lequel le commutateur de lecture à lames (12) et le commutateur à lames inviolable (14) sont disposés pour être séparés l'un de l'autre dans un sens haut-bas.

9. Système selon la revendication 1 ou 8, comprenant en outre une carte de lecture (13) sur laquelle sont montés le commutateur de lecture à lames (12) et le commutateur à lames inviolable (14),
dans lequel lorsque le dispositif sans fil de mesure automatique (200, 600) est attaché au dispositif de compteur (100, 150, 500),
le commutateur de lecture à lames (12) est disposé au niveau d'une partie terminale supérieure de la carte de lecture (13), et
le commutateur à lames inviolable (14) est disposé pour être séparé du commutateur de lecture à lames (12) dans un sens perpendiculairement vers le bas.

10. Système selon la revendication 8 ou 9, dans lequel le commutateur à lames inviolable (14) présente une sensibilité plus élevée que le commutateur de lecture à lames (12).
